(19) Europäisches Patentamt
European Patent Office
Office européen des brevets

(11) **EP 1 274 231 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
***H04N 5/232*** *(2006.01)*

(21) Anmeldenummer: **02013214.8**

(22) Anmeldetag: **15.06.2002**

(54) **Verfahren und Vorrichtung zur Steuerung von Schwenk-Neige-Bewegungen einer Kamera**

Method and device for controlling pan and tilt movements of a camera

Méthode et dispositif pour contrôler les mouvements panoramiques et d'inclinaisons d'une caméra

(84) Benannte Vertragsstaaten:
**AT BE CH CY DE DK ES FI FR GB GR IE IT LI LU MC NL PT SE TR**

(30) Priorität: **06.07.2001 DE 10132929**

(43) Veröffentlichungstag der Anmeldung:
**08.01.2003 Patentblatt 2003/02**

(73) Patentinhaber: **Funkwerk plettac electronic GmbH 90766 Fürth (DE)**

(72) Erfinder: **Fleissner, Horst 90579 Langenzenn (DE)**

(74) Vertreter: **Pröll, Jürgen et al Maryniok & Eichstädt Anwaltssozietät Kuhbergstrasse 23 96317 Kronach (DE)**

(56) Entgegenhaltungen:
EP-A- 0 529 317       EP-A- 0 944 259
DE-A- 19 815 106       US-A- 5 627 616

**Beschreibung**

Die Erfindung betrifft ein Verfahren und eine Vorrichtung zur Steuerung von Schwenk-Neige-Bewegungen einer Kamera, insbesondere einer Videokamera in einem Überwachungssystem.

Vorrichtungen zur Steuerung von Kameras, insbesondere Überwachungssystemen, sind weithin bekannt. Hierbei werden Bildsequenzen einer Videokamera fortlaufend auf einen Monitor übertragen. Um unterschiedliche Szenen einzufangen, muß die Kamera geschwenkt und/oder geneigt werden.

Die Schwenkbewegung der Videoüberwachungskamera wird um die vertikal verlaufende Achse, die sogenannte Pan-Achse, und die Neigebewegung um die horizontal verlaufende Achse, die sogenannte Tilt-Achse, ausgeführt. Die Pan-Achse und die Tilt-Achse stehen in einem Winkel von 90 Grad zueinander.

Eine von einer Videoüberwachungskamera aufgenommene Szene wird auf einem Video-Monitor oder auf dem Monitor eines PCs wiedergegeben.

Benutzergeführte Kamerasteuerungen sind in verschiedenen Ausgestaltungsformen bekannt. Hierbei werden insbesondere Realisierungen mit Tasten jeweils für das Bewegen nach oben, unten, rechts und links sowie Kombinationen von diesen eingesetzt. Die Kamera schwenkt dann solange in die vorgegebene Richtung bis die Taste losgelassen wird, oder aber in eine andere alternative Ausführungsform umgeschaltet wird bis eine entsprechende Stopptaste betätigt wird. Aus US 3984628 ist bekannt die Funktion der Tasten durch einen Steuerknüppel zu ersetzen, mittels welchem die gewünschte Bewegungsrichtung und das Ziel angefahren werden kann.

Bekannt sind auch Ausführungsformen bei denen die Monitor- und die Bedienerfunktion an einen Rechner gekoppelt sind. In diesem Fall wird das Kamerabild digitalisiert und dem Rechner zugeführt. Der Bildschirm des Rechners oder ein Teil des Bildschirms dient dann gleichzeitig als Monitor für die Kamera. In dieser Ausführung können die vorher genannten Tasten bestimmte, durch die Computersoftware oder vom Bediener festgelegte Tasten der Computertastatur sein.

Eine weitere bekannte Ausführung mit Hilfe eines Computers ist die Nachführung der Kamera durch Bewegungsbalken, die auf dem Monitor eingeblendet werden und mit Hilfe einer Positioniereinrichtung, z. B. einer sogenannten Maus oder einem berührungssensitiven Bildschirm gesteuert werden. Nachteilig bei diesem Verfahren ist, dass die Datenverbindung zwischen der Eingabestation, für die Befehle, und der Kamerasteuerung für den gesamten Steuerungsvorgang aufrecht erhalten sein muß;

Aus DE 198 11 286 ist eine Kamerasteuerung, insbesondere für Überwachungskameras, offenbart. Diese besteht aus einer Steuereinheit und einer Überwachungskameraeinheit, welche über eine Übertragungsstrecke verbunden sind. Die Steuereinheit weist eine Anzeigeeinheit auf, auf welche die Videosignale der Übertragungskameraeinheit dargestellt werden. Die Anzeigeeinheit ist in mehrere Bereiche unterteilt. Mittels Eingabeeinheit ist die Überwachungskameraeinheit über die Anzeigeeinheit zu steuern, wobei relative Positionsdaten hierzu übertragen werden.

Aus DE 4233137 ist ein Verfahren zur Steuerung einer Kamera mit folgenden Schritten offenbart:

Ein von der Kamera erzeugtes Bild wird an einen ersten Computer gesendet. Das Bild wird von dem ersten Computer über erste Datenverbindung an einen weiteren Computer gesendet. Das Bild wird auf dem Bildschirm des zweiten Computers dargestellt. Anschließend wird die alte Position der Kamera einem Punkt auf dem Bildschirm des zweiten Computers zugeordnet. Auf dem Bildschirm des zweiten Computers wird zusätzlich zum dargestellten Bild ein mit der Positioniereinrichtung positionierbarer Zeiger dargestellt. Als Antwort auf ein mit einer Auslöseeinrichtung auslösbares Signal wird eine neue Kameraposition in Abhängigkeit von der aktuellen Position des Zeigers und der Bildmitte des Bildschirmes, welche der vorherigen Position der Kamera zugeordnet ist, berechnet. Die neue Position der Kamera wird vom zweiten Computer über eine zweite Datenverbindung an den ersten Computer gesendet. Die neue Position der Kamera wird in dem ersten Computer in Steuerungsinformationen umgewandelt und die Kamera wird auf die neue Position verfahren. Hierbei wird aber nicht berücksichtigt, dass die Winkelstellung der optischen Achse zur Pan-Achse Auswirkung darauf hat, ob der Zielpunkt korrekt eingestellt wird. Es wird folglich keine Geometriekorrektur durchgeführt.

Aufgabe der Erfindung ist es, ein Verfahren und eine Vorrichtung anzugeben, welche obig genannten Nachteile, insbesondere die geometrische Verzerrung, vermeidet und eine exakte Neupositionierung der Kamera auf einen frei auswählbaren Szenenpunkt ermöglicht.

Diese Aufgabe wird durch die Merkmale des Anspruchs 1 gelöst.

Vorteilhafte Ausgestaltungen der Erfindung sind in den anhängigen Ansprüchen, der weiteren Beschreibung sowie der zugehörigen Figuren angegeben.

Das lösungsgemäße Verfahren dient zum motorbetriebenen Schwenken und Neigen einer Videoüberwachungskamera durch einen Schwenk-/ Neigekopf, auch SNK genannt oder einer sogenannten Dom-Kamera.

Die Kamerasteuerung besteht aus einer Steuereinheit, welche sich aus einer Rechnereinheit, einer Anzeigeeinheit, einer Eingabeeinheit und einer Sende/Empfangseinheit zusammensetzt. Im weiteren ist eine Überwachungskameraeinheit in einem hierarchisch aufgebauten Überwachungsnetz vorhanden. Das Überwachungsnetz besteht beispielsweise aus einem Netzwerk von Zentrale und Unterzentralen, einer Alarmanlage, einem Telefonnetzwerk auf digitaler Basis oder einem Kommunikationsnetzwerk. Das Kommunikationsnetzwerk kann sowohl ein analoges als auch ein digitales Netz sein.

Die Überwachungskameraeinheit besteht aus einer Überwachungskamera, einer Positioniereinheit, welche die Positionierung der Überwachungskamera vornimmt, insbesondere einem Schwenkneigekopf- oder Dom, einer Steuereinheit und einer Sende-/Empfangseinheit.

Die Überwachungskamera erfasst die von ihr überwachte Szene. Die Videosignale der Überwachungskamera werden von der Steuereinheit der Überwachungskamera - vorzugsweise komprimiert - über die Sende/Empfangseinheit der Überwachungskameraeinheit und über das Überwachungsnetzwerk an die Steuereinheit der Kamerasteuerung übertragen. Die Steuereinheit der Kamerasteuerung empfängt das übertragene Videosignal der Überwachungskamera und leitet es an die Rechnereinheit weiter. Diese dekomprimiert das Videosignal, soweit dies notwendig ist, insbesondere wenn das Videosignal komprimiert übertragen wird, und stellt es auf der Anzeigeeinheit dar. In einer weiteren Ausgestaltung der Erfindung werden die Videosignaldaten unkomprimiert übertragen.

Im Mittelpunkt der Anzeigeeinheit ist eine Markierung eingeblendet, welche den Mittelpunkt des Anzeigebereichs der Anzeigeeinheit darstellt und zugleich die Mitte der von der Überwachungskameraeinheit aufgenommenen Szene bezeichnet. Auf der Anzeigeeinheit ist eine Markierung vorhanden. Diese Markierung ist einer der Eingabeeinheiten zugeordnet und wird mittels dieser Eingabeeinheit über den gesamten Anzeigebereich der Anzeigeeinheit bewegt. Mit dieser Markierung wählt ein Benutzer einen Punkt in der, von der Überwachungskamera erfassten Szene aus, in dem er die Markierung an einen beliebigen Punkt des Anzeigebereichs der Anzeigeeinheit verschiebt und durch Betätigung der Eingabeeinheit aktiviert. Dieser Punkt soll durch die Schwenk-Neige-Bewegung der Überwachungskamera in die Mitte des Anzeigebereichs der Anzeigeeinheit verschoben werden. Die Rechnereinheit errechnet den relativen Abstand zwischen der Markierung auf dem Anzeigebereich der Anzeigeeinheit und der Mitte des Anzeigebereiches in horizontaler und vertikaler Richtung in Bezug auf Breite und Höhe des Anzeigebereichs der Anzeigeeinheit und überträgt diese Relativdaten über die Sende/Empfangseinheit an die Steuereinheit der Überwachungskamera. In vorteilhafter Weise werden diese Daten vor der Übertragung komprimiert.

Die Steuereinheit der Überwachungskamera analysiert die übertragenen Relativdaten und errechnet die Absolutwerte zur Steuerung der Positioniereinheit der Überwachungskamera. Dies erfolgt anhand der aktuellen Einstellungen der Positioniereinheit der Überwachungskamera insbesondere unter Berücksichtigung des Objektiv-Öffnungswinkels. Anschließend steuert die Steuereinheit der Überwachungskamera die Positioniereinheit mit den errechneten Absolutwerten an. Die Überwachungskamera wird schnellstmöglich auf die neue Position ausgerichtet.

Die Steuerbefehle können sowohl manuell, wie im vorherigen beschrieben, als auch automatisch, durch Bildverarbeitung, sogenannter Video Motion Detection, ausgelöst werden. Beim manuellen Steuern wird der Ort der Aktion, der Zielpunkt, auf dem Monitor mit einer eingeblendeten Marke bestimmt, die durch ein analog-proportional arbeitendes Bedienmittel, z. B. einer Maus, einem Trackball, einem Touchscreen, etc. bewegt wird. Durch Einfach- oder Doppelklick, bzw. kurzes oder längeres Betätigen oder Berühren können Befehle unterschieden und ausgelöst werden. Auch Rädchen, sogenannte Wheels, und zusätzliche Tasten können genutzt werden.

Besonders Vorteilhaft ist die Immunität des Systems gegenüber Übertragungsverzögerungen. Die Verzögerungszeit hat keinen Einfluß auf die Einstellgenauigkeit, weil stets eine Ortsinformation an den SNK oder Dom übertragen wird und die Übertragungsstrecke nicht in einen Mensch/Maschine-Regelkreis einbezogen ist. Die Übertragungsverzögerung bewirkt lediglich, dass eine Aktion verzögert beginnt und endet. Da ferner nur relative Ortsinformationen bzw. Daten vom Bedienplatz zum SNK oder Dom übertragen werden und die aktuelle, absolute Stellung von Pan, Tilt, Focus und Zoom am Bedienplatz nicht benötigt wird, ist das Übertragungssystem von unnötigen, zeitverbrauchenden Datenübertragungen entlastet.

Ist jedoch die Übertragungsverzögerung sehr kurz können weitere vorteilhafte Steuerungsmöglichkeiten genutzt werden. So kann z. B. eine sich bewegende Person durch ständiges Nachführen der eingeblendeten Marke in Bildmitte gehalten, oder es können Focus oder Zoom kontinuierlich proportional eingestellt werden.

Bei verzögerter Übertragung der Daten ist das System in der Lage folgende Befehle oder Aktionen auszuführen.

Durch Pan- und Tiltaktion wird der Zielpunkt nach Einfachklick oder ähnliches in die Bildmitte verschoben. Zum Beispiel wird nach einem Doppelklick der Zielpunkt durch Pan- und Tiltaktion von einem Bildrand an den gegenüberliegenden Bildrand oder in die gegenüberliegende Bildecke verschoben. Durch Zoomaktion wird der Bildausschnitt nach Einfachklick, oder ähnliches, so vergrößert, dass der Zielpunkt am Bildrand steht. Dies bedeutet, dass der Öffnungswinkel des Objektivs verkleinert wird. Nach Doppelklick, oder ähnliches, wird das Sichtfeld um einen vorwählbaren Faktor vergrößert. Dies hat zur Folge, dass der Öffnungswinkel des Objektivs vergrößert wird. Am Ort des Zielpunktes wird das Bild automatisch durch eine Autofocusfunktion scharf gestellt.

Insbesondere bei verzögerungsfreier Übertragung der Daten können die nachfolgenden Aktionen ausgeführt werden. Durch Pan- und Tiltaktion kann der Zielpunkt durch ständiges Nachführen der eingeblendeten Marke in der Bildmitte gehalten werden. Mit dem Rädchen, auch Wheel genannt, kann der Öffnungswinkel des Objektivs vergrößert und verkleinert werden, dies bedeutet, auf Weitwinkel oder Tele eingestellt werden. Im weiteren ist mit einem zweiten Rädchen, oder nach Betätigung einer Umschalttaste mit dem ersten Rädchen eine Schärfepunkteinstellung zwischen Nah- und Ferneinstellung veränderbar. Durch die Betätigung einer Umschalttaste und Vor-/ Rückwärtsbewegung des Bedienmittels ist der Öffnungswinkel des Kameraobjektivs veränderbar. Auf gleiche Weise, nach Betätigung einer anderen Umschalttaste, ist auch der Schärfepunkt nachjustierbar.

Die unterschiedlichen Befehle für Pan und Tilt bzw. Autofocus werden stets mit den aktuellen, relativen Abständen zum SNK oder Dom übertragen. Insbesondere werden die relativen Mittenabstände übertragen. Bei Ausführung eines Befehl für einen Zoomvorgang müssen im weiteren Vergrößerungs- oder Verkleinerungsfaktoren, jedoch keine Ortsinformationen übertragen werden. Zur Steuerung von Focus oder Zoom, insbesondere über das Wheel oder durch eine Vor- oder Rückwärtsbewegung der Maus, wird die Anzahl der auszuführenden Inkremente übertragen, welche durch die manuelle Bewegung ausgelöst werden. Nach dem Ausführen eines Befehls und erreichen der Zieleinstellung wird die Ausführung rückgemeldet. Ist eine Ausführung nicht möglich oder treten Grenzkonflikte auf, so erfolgt eine entsprechende Fehlermeldung vom SNK oder Dom zur Bedieneinheit

Im weiteren wird das Verfahren und die zugehörige Vorrichtung anhand eines konkreten Ausführungsbeispiels anhand der nachfolgenden Figuren aufgezeigt.

Es zeigt:

FIG 1   eine schematische Darstellung eines Bildschirmes zur Wiedergabe der von einer Überwachungskamera aufgenommenen Szene;

FIG 2   die Grundlagen für die Berechnungsschritte nach dem Übertragen der Daten zum SNK bzw. Dom;

FIG 3   eine schematische Darstellung zur Verdeutlichung der Grundlagen für die Ermittlung der Übertragungsfunktion und der durchzuführenden arithmetischen Aktionen;

FIG 4   eine schematische Darstellung eines Funkalarmnetzes mit Unterzentralen;

FIG 5   einen schematischen Aufbau einer Steuereinheit; und

FIG 6   einen schematischen Aufbau einer Überwachungskameraeinheit.

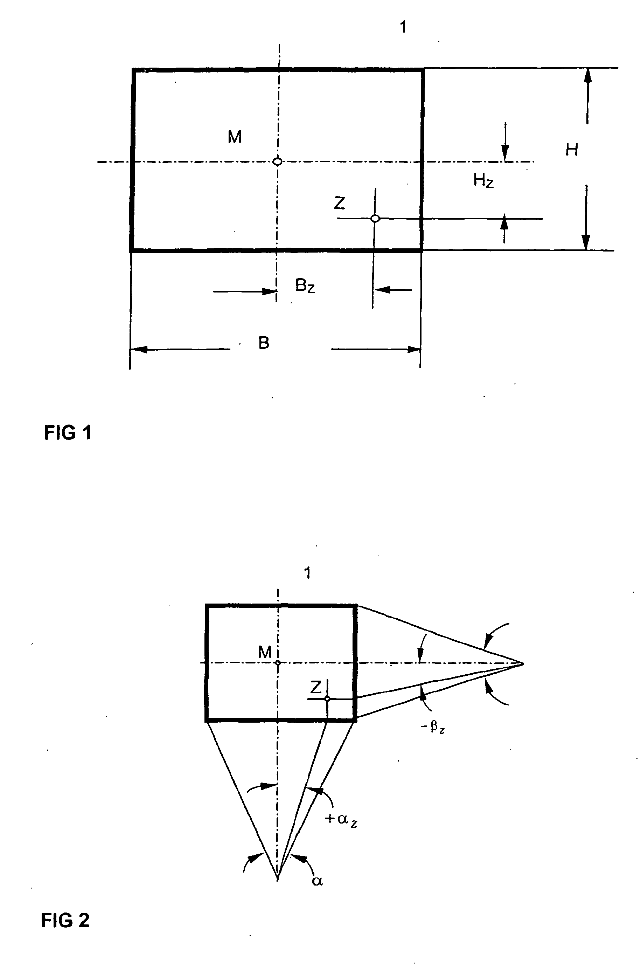

In FIG 1 ist ein Bildschirm 1 dargestellt. Auf diesem Bildschirm 1 wird die von einer Kamera, insbesondere einer Videoüberwachungskamera, aufgenommene aktuelle Szene dargestellt. Der Bildschirm 1 weist eine virtuelle Markierung auf, welche die Mitte M des sichtbaren Bildes markiert. Außerdem weist er eine an sich bekannte Breite B des sichtbaren Bildes und eine Höhe H des sichtbaren Bildes auf. Im weiteren ist ein zufällig gewählter Zielpunkt Z vorhanden. Dieser Zielpunkt Z soll durch eine Aktion von SNK oder Dom auf die Mitte M des sichtbaren Bildes zentriert werden. Hierzu müssen zunächst die Abstände zwischen dem Zielpunkt Z und der Mitte M des sichtbaren Bildes errechnet werden. Der horizontale Abstand $B_Z$ wird als Abstand zwischen dem Zielpunkt Z und der Mitte M des sichtbaren Bildes bezeichnet. Im weiteren wird der vertikale Abstand $H_Z$ als Abstand zwischen dem Zielpunkt Z und der Mitte M des sichtbaren Bildes ermittelt. Hierbei werden vereinbarungsgemäß Verschiebungen nach rechts von der Mitte M des sichtbaren Bildes aus mit positiven Vorzeichen, Verschiebungen nach links, mit negativen Vorzeichen bewertet. Es wird dem relativen vertikalen Abstand $h_z$ ein positives Vorzeichen zugewiesen wird, wenn der Zielpunkt Z auf dem Bildschirm 1 oberhalb der Mitte M des sichtbaren Bildes liegt und dem relativen horizontalen Abstand $b_z$ ein positives Vorzeichen zugewiesen wird, wenn sich der Zielpunkt Z rechts der Mitte M des sichtbaren Bildes befindet und dem relativen vertikalen Abstand $h_z$ ein negatives Vorzeichen zugewiesen wird, wenn der Zielpunkt Z auf dem Bildschirm 1 unterhalb der Mitte M des sichtbaren Bildes liegt und dem relativen horizontalen Abstand $b_z$ ein negatives Vorzeichen zugewiesen wird, wenn sich der Zielpunkt Z links der Mitte M des sichtbaren Bildes befindet. Wegen des Rasteraufbaus eines Videobildes erfolgt die Ermittlung der absoluten Abstände des Zielpunktes Z von der Mitte M des sichtbaren Bildes, des vertikalen Abstands $H_Z$ und des horizontalen Abstands $B_Z$, durch Zeitmessung mit anschließender Umrechnen auf die geometrische Anordnung. Im weiteren werden die relativen Abstände des Zielpunktes Z von der Mitte M des sichtbaren Bildes - der relative horizontale Abstand $b_Z$, und der relative vertikale Abstand $h_Z$ - auf dem Bildschirm 1, im Verhältnis zur halben Bildbreite bzw. halben Bildhöhe wie folgt berechnet:

$$b_z = 2\frac{B_z}{B} \qquad h_z = 2\frac{H_z}{H}$$

Das Vorzeichen von $B_Z$ überträgt sich dabei auf $b_z$ und das Vorzeichen von $H_Z$ überträgt sich auf $h_Z$.
Es besteht nunmehr die Möglichkeit die weiteren durchzuführenden Berechnungen für die Steuerung des SNK oder Doms aufgrund der vorliegenden relativen Mittenabstände $b_Z$ und $h_Z$ durchzuführen und dann die absoluten Daten zur Steuerung des SNK oder Doms zu übertragen, oder die errechneten relativen Abstände $b_Z$ und $h_Z$ zum SNK oder Dom zu übertragen. Für den Fall, dass die absoluten Steuerdaten zunächst berechnet und diese an den SNK bzw. Dom übertragen werden sollen, müssen die in der Überwachungskamera aktuell eingestellten Werte wie Öffnungswinkel des Objektives, Stellung des SNK bzw. Dom kontinuierlich an den Bedienplatz übertragen werden. Dies belastet die Übertragungsstrecke mit Daten und kostet Zeit. Um dies zu vermeiden wird im Weiteren lediglich die Ausführungsform betrachtet, bei welcher die relativen Mittenabstände an die Überwachungskameraeinheit übertragen werden und die weiteren Berechnungen dort getätigt werden.

Es werden diese in entsprechende Daten zur Ansteuerung der Kamerasteuerung verwendet.

Es wird außerdem eine Geometriekorrektur durchgeführt, um den Zielpunkt Z auf die Mitte M des sichtbaren Bildes zu verschieben. Zur Durchführung der Geometriekorrektur wird wie folgt vorgegangen.

Zur Weiterbearbeitung im SNK oder Dom müssen zusätzlich der horizontale Öffnungswinkel des Objektives der Videoüberwachungskamera sowie der vertikale Öffnungswinkel des Objektives der Überwachungskamera bekannt sein. Diese Daten werden für die weitere Berechnung zur Neueinstellung des SNK bzw. Doms benötigt.

Der horizontale Öffnungswinkel $\alpha$ des Objektives der Videoüberwachungskamera für volle Bildbreite B und der vertikale Öffnungswinkel $\beta$ des Objektives der Videoüberwachungskamera für volle Bildhöhe H sind bekannt oder können mittels Stellungsgeber des Zoom-Objektivs gemessen werden. Außerdem muss der Winkel in horizontaler Richtung zwischen Zielpunkt Z und der Mitte M des sichtbaren Bildes, im weiteren mit $\alpha_Z$ bezeichnet, errechnet werden. Außerdem muss der Winkel in vertikaler Richtung zwischen dem Zielpunkt Z und der Mitte M des sichtbaren Bildes, im weiteren mit $\beta_Z$ bezeichnet, errechnet werden.

Die Wertebereiche für die Winkel $\alpha_Z$ und $\beta_Z$ erstrecken sich im Bereich von >-90° bis <+90°, da die Werte der Winkel $\alpha$ und $\beta$ bei Objektiven, welche in der Sicherheitstechnik Anwendung finden, zwischen >0° und <180° und die Werte für den relativen horizontalen Abstand $b_Z$ und den relativen vertikalen Abstand $h_Z$ zwischen 0 und +-1 liegen. Die Vorzeichen von $b_Z$ und $h_Z$ können daher unverändert übertragen werden. Tangenswerte von unendlich treten nicht auf.

Es ergibt sich somit die angenäherte Formel für kleine Winkel von $\alpha_Z$ und $\beta_Z$ wie folgt:

$$\alpha_z = b_z \frac{\alpha}{2} \qquad\qquad \beta_z = h_z \frac{\beta}{2}$$

Exakt ausgedrückt lautet die Formel, auch für große Winkel:

$$\alpha_z = \arctan\left( b_z \cdot \tan\frac{\alpha}{2} \right) \qquad\qquad \beta_z = \arctan\left( h_z \cdot \tan\frac{\beta}{2} \right)$$

Es ist im Weiteren zu beachten, dass der relative horizontale Abstand $b_Z$ und der relative vertikale Abstand $h_Z$ bzw. der horizontale Winkel $\alpha_Z$ und der vertikaler Winkel $\beta_Z$ mit -1 multipliziert werden müssen, wenn die Bildwiedergabe auf dem Bildschirm 1 180° um die Mitte M des Bildschirms 1 gedreht ist.

Im weiteren muss der Neigewinkel $\gamma_Z$ der Überwachungskamera gegenüber der Pan-Achse berücksichtigt werden.

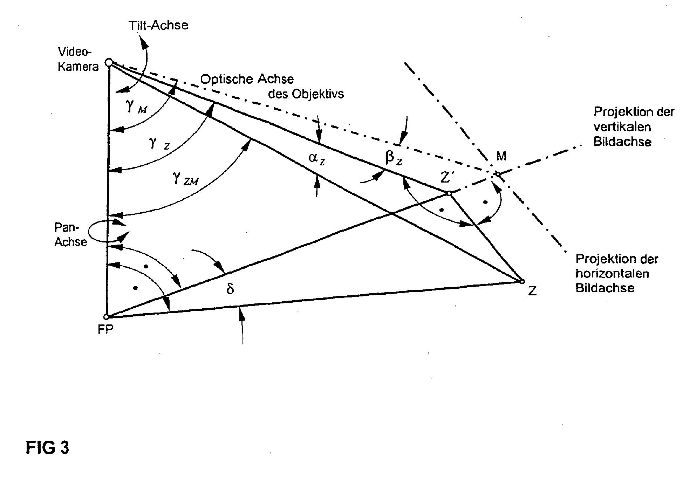

Dies wird anhand von Figur 3 näher erläutert.

Bei $\gamma_Z$ handelt es sich um den Neigewinkel des Punktes Z' gegenüber der Pan-Achse vor der Ausführung der Neigebewegung. Der Punkt Z' ist die horizontale Projektion des Zielpunktes Z auf die vertikale Mittelachse.

$\gamma_Z$ errechnet sich wie folgt:

$$\gamma_Z = \gamma_M + \beta_Z$$

Der Winkel $\gamma_M$ entspricht dem Neigewinkel der Mitte M des sichtbaren Bildes, bzw. der optischen Achse des Objektivs, gegenüber der Pan-Achse vor der Neigebewegung und wird vom Positionsgeber des SNK bzw. Doms geliefert.

Damit der Zielpunkt Z in die Mitte M des sichtbaren Bildes auf dem Bildschirm 1 verschoben wird, muss der Neigewinkel $\gamma_{ZM}$ durch die Schwenk-Neigebewegung des SNK oder Dom eingestellt werden.

Dieser wird wie folgt ermittelt:

$$\gamma_{ZM} = \arccos(\cos\gamma_Z \cdot \cos\alpha_Z)$$

Zu beachten ist hierbei, dass der Winkel $\gamma_Z$ rein rechnerisch negativ werden kann, wenn der Betrag von - $\beta_Z$ größer als $\gamma_M$ ist.

Wenn der Winkel $\gamma_{ZM}$ kleiner als 0 ist, daher ein negatives Vorzeichen aufweist, muß eine Korrektur durchgeführt werden. Anderenfalls würden Objekte, welche von der Videoüberwachungskamera aufgenommen werden, auf dem Bildschirm 1 kopfstehenden abgebildet werden. Hierzu bieten sich zwei Lösungsalternativen an. Bei einer Lösungsalternative wird das Vorzeichen von $\gamma_{ZM}$ invertiert und der zugehörige Schwenkwinkel $\delta_{ZM}$ wird um +-180° korrigiert. Eine zweite Lösungsmöglichkeit besteht darin, dass die Winkel $\gamma_{ZM}$ und $\delta_{ZM}$ unverändert verwendet werden, wie sie berechnet wurden. In diesem Fall muß jedoch die Videoüberwachungskamera +-180° um die optische Achse gedreht oder das Videosignal so nachbearbeitet werden, dass das Bild auf dem Bildschirm 1 wieder in Normallage erscheint.

Als besonders vorteilhaft hat sich erwiesen, diejenige Alternative zu verwenden, welche die kürzere Ausführungsdauer benötigt.

Im weiteren ist zu berücksichtigen, dass $\gamma_Z$ nicht 0 oder 180° sein darf. Hierauf wird im weiteren noch eingegangen.

Außerdem ist zu beachten, wenn die Kamera um die Tilt-Achse beliebig weit gedreht werden kann, also keine mechanischen oder elektronischen Winkelbegrenzungen angewendet sind, es vorteilhaft ist, mit Winkeln von 0° < $\gamma_{ZM}$ < =180° oder Winkel zwischen 0° > $\gamma_{ZM}$ >= -180° zu rechnen. Dazu sind aber die folgenden Korrekturen nötig:

Der neue hier zu errechnende Winkel $\gamma'_{ZM} = \gamma_{ZM} - 360°$, wenn 180° < $\gamma_{ZM}$ < 360° oder $\gamma'_{ZM} = \gamma_{ZM} + 360°$ wenn -180° > $\gamma_{ZM}$ < 360°. In diesem Fall wird $\gamma'_{ZM}$ anstatt dem ursprünglich errechneten $\gamma_{ZM}$ an den SNK übertragen.

Letztlich ist noch der Schwenkwinkel $\delta$ zu errechnen und zu berücksichtigen. Der Schwenkwinkel $\delta$ für die auszuführende Schwenkbewegung errechnet sich nach der Formel

$$\delta = \arctan\left(\frac{\tan\alpha_z}{\sin\gamma_z}\right)$$

Der Schwenkwinkel $\delta$ ist derjenige Winkel, um den die Pan-Achse geschwenkt werden muss, um den Zielpunkt Z in die Mitte M des sichtbaren Bildes zu bringen.

Es ist aber auch hier zu beachten, dass $\gamma_Z$ nicht die Werte 0° oder 180° annehmen darf. Andernfalls würden bei sin $\gamma_Z$ = 0 Konflikte wegen Division durch 0 auftreten. Ergibt sich rechnerisch ein Wert für $\gamma_Z$ = 0, wird ersatzweise mit einem relativ kleinen Wert, nahe 0, für sin $\gamma_Z$ weitergerechnet, vorzugsweise mit positivem Vorzeichen.

Die neue Winkelstellung der Pan-Achse $\delta_{ZM}$ nach der Schwenkbewegung errechnet sich nach der Formel

$$\delta_{ZM} = \delta_M + \delta$$

Es wird vorausgesetzt, dass der Winkel $\delta$ bei Rechtsdrehung zunimmt.

Hierbei ist $\delta_M$ die Winkelstellung der Pan-Achse vor der Schwenkbewegung und $\delta_{ZM}$ die Winkelstellung der Pan-Achse nach der Schwenkbewegung. Hierdurch wird der Zielpunkt Z in die Mitte M des sichtbaren Bildes verschoben.

Nach der Berechnung des Schwenkwinkels $\delta$ und des Neigewinkels wird der SNK bzw. Dom auf die neuen Winkelwerte verfahren und der Zielpunkt Z zur neuen Mitte M des sichtbaren Bildes.

Im weiteren wird die Erfindung anhand eines konkreten Ausführungsbeispiels nochmals erläutert.

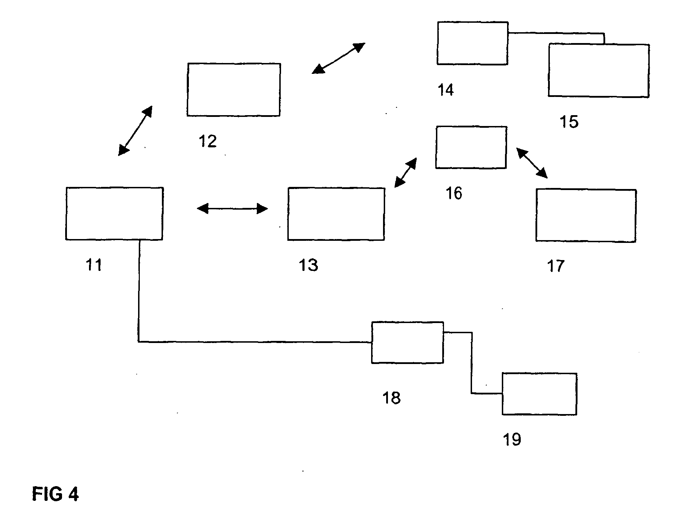

Bei der beispielhaften Ausführungsform gemäß FIG.4 handelt es sich um ein Überwachungsnetzwerk, welches aus einer Zentrale 13, mehreren Unterzentralen 12,14,16,18, einer Steuereinheit 11 und den Überwachungskameraeinheiten 15,17 und 19 besteht.

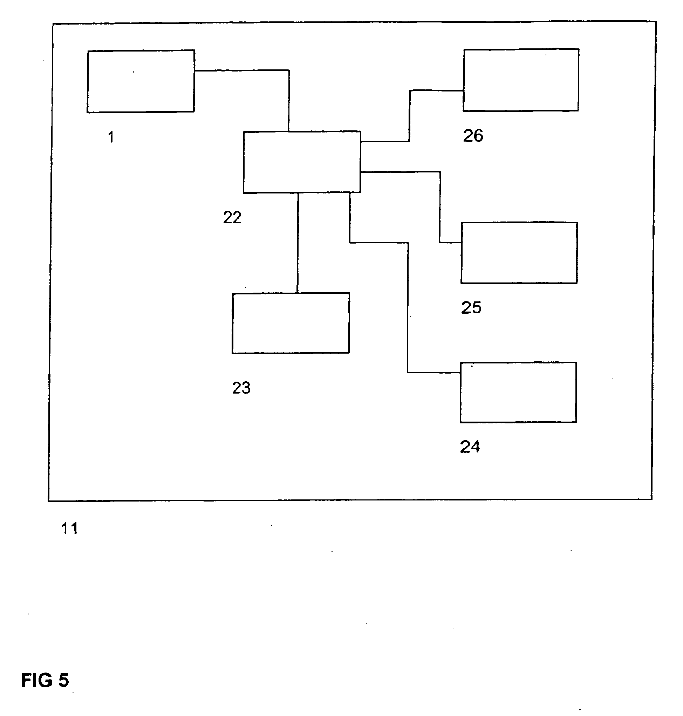

Die in FIG. 5 näher dargestellte Steuereinheit 11 besteht aus dem Bildschirm 1, einer Recheneinheit 22, Bedieneinheiten 23, 24, 25, welche auch Eingabeeinheiten, wie etwa eine Tastatur, eine Maus usw. sein können, und einer Sende- und Empfangseinheit 26.

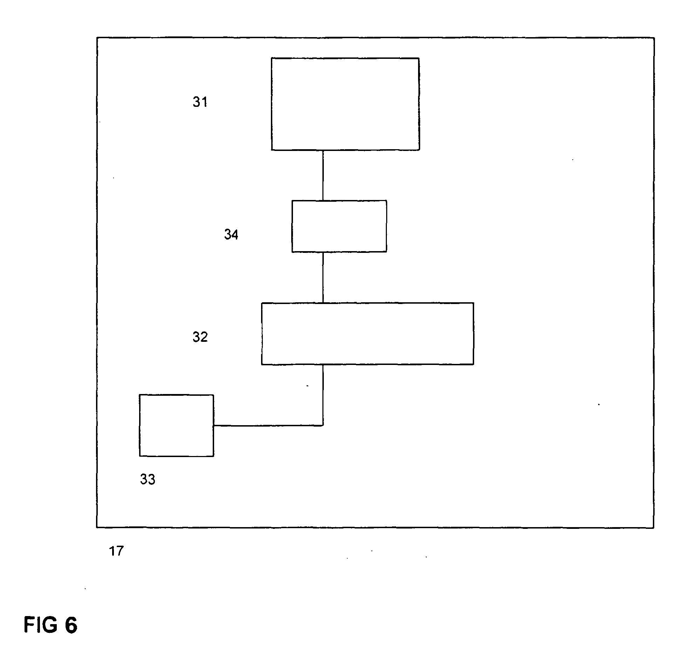

Die in FIG. 6 näher dargestellte Überwachungskameraeinheit 17 besteht aus einer Kameraeinheit 31, einer Positionierungseinheit 34, einer Steuereinheit 32 und einer Sende- und Empfangseinheit 33.

Der Bildschirm 1 ist in mehrere Bereiche aufgeteilt. Die Recheneinheit 22 steuert die Anzeige auf dem Bildschirm 1. Auf dem Bildschirm 1 ist mindestens ein Anzeigebereich vorgesehen, in welchem die Recheneinheit 22 das Videosignal jeweils einer der Überwachungskameraeinheiten 15,17 oder 19, d.h. die von diesen erfassten Szenen, darstellt. Im weiteren Ausführungsbeispiel ist jedoch nur jeweils ein Videosignal einer Überwachungskameraeinheit auf dem gesamten Bildschirm 1 darstellbar. In einer vorteilhaften Ausgestaltung der Erfindung ist aber die Möglichkeit gegeben, mehrere Videosignale von unterschiedlichen Überwachungskameras zugleich darzustellen. Über jede einzelne Bedieneinheit 23, 24, 25 kann jede der vorhandenen Überwachungskameraeinheiten 15,17,19 ausgewählt und deren aktuelles Videosignal angezeigt werden. Die Bedieneinheiten 23, 24, 25 sind redundant. In der weiteren Beschreibung ist die Überwachungskameraeinheit 17 ausgewählt und deren Videosignal wird auf dem Bildschirm 1 der Steuereinheit 11 von der Recheneinheit 22 der Steuereinheit 11 dargestellt.

Die Kameraeinheit 41 der Überwachungskameraeinheit 17 erfasst einen Teilbereich des zu überwachenden Sichtfeldes. Die Steuereinheit 42 der Überwachungskameraeinheit 17 komprimiert das Videosignal der Kameraeinheit 41 der Überwachungskameraeinheit 17 und die Sende- und Empfangseinheit 43 der Überwachungskameraeinheit 17 übermittelt dieses an die Unterzentrale 16. Diese übermittelt das komprimierte Videosignal an die Zentrale 13, welche das komprimierte Videosignal weiter an die Steuereinheit 11 übermittelt. Die Steuereinheit 11 empfängt über die Sende- und Empfangseinheit 26 das komprimierte Videosignal und leitet es an die Recheneinheit 22 weiter. Die Recheneinheit 22 dekomprimiert das Videosignal und stellt das Videosignal auf dem Bildschirm 1 dar.

Zur Visualisierung der aktuellen Einstellungen der Überwachungskameraeinheit 17 überträgt die Steuereinheit 32 der Überwachungskameraeinheit 17 nach jeder Veränderung der Einstellung der Positionierungseinheit 34 der Überwachungskameraeinheit 17 und/oder des Zoomes und/oder des Fokuses der Kameraeinheit 31 der Überwachungskameraeinheit 17 die aktuellen Einstellungsdaten an die Steuereinheit 11. Die Recheneinheit 22 wertet diese Daten aus und stellt die aktuellen Einstellungen der Überwachungskameraeinheit 17 über Bildlaufleisten und Markierungen in für den Benutzer leicht erkennbarer Form dar.

Der Benutzer der Steuereinheit 11 erhält die von der Überwachungskameraeinheit 17 aktuell erfasste Szene auf dem Bildschirm 1 dargestellt. Soll die Ausrichtung der Überwachungskameraeinheit 17 verändert werden, so steuert der Bediener über die Bedieneinheiten 23, 24, 25 eine Markierung an diejenige Stelle des Bildschirmes 1, welche die neue Szenenmitte sein soll. Diese Stelle wird als der Zielpunkt Z von der Steuereinheit 11 festgesetzt. Die Steuereinheit 11 leitet das Positionieren der Überwachungskameraeinheit 17 auf den neu ausgewählten Zielpunkt Z als Szenenmittelpunkt, d.h. als neue Mitte M des sichtbaren Bildes des Bildschirms 1 ein.

Durch die Auswahl eines neuen Zielpunktes Z und die dadurch neu auszuführende Positionierung der Positionierungseinheit 34 errechnet die Recheneinheit 22 den Abstand zwischen dem Zielpunkt Z und der Mitte M des sichtbaren Bildes. Hierbei ermittelt die Recheneinheit 22 den horizontalen Abstand $B_Z$ als den horizontalen Abstand zwischen dem Zielpunkt Z und der Mitte M des sichtbaren Bildes. Außerdem ermittelt die Recheneinheit 22 den vertikalen Abstand $H_Z$ als vertikalen Abstand zwischen dem Zielpunkt Z und der Mitte M des sichtbaren Bildes. Liegt der Zielpunkt Z oberhalb der Mitte M des sichtbaren Bildes, wird dies mit positiven Vorzeichen durch die Recheneinheit 22 bewertet, liegt er unterhalb der Mitte M des sichtbaren Bildes, vergibt die Recheneinheit 22 ein negatives Vorzeichen. Liegt der Zielpunkt links der Mitte M des sichtbaren Bildes, so wird der horizontale Abstand $B_Z$ mit negativen Vorzeichen durch die Recheneinheit 22 bewertet, befindet er sich rechts der Mitte M des sichtbaren Bildes, bewertet dies die Recheneinheit 22 mit positiven Vorzeichen. Im konkreten Ausführungsbeispiel nach Figur 1 liegt der Zielpunkt Z rechts unterhalb der Mitte M des sichtbaren Bildes. Daher vergibt die Recheneinheit 22 für den horizontalen Abstand $B_Z$ ein positives Vorzeichen, für den vertikalen Abstand $H_Z$ hingegen ein negatives Vorzeichen.

Aus dem horizontalen Abstand $B_Z$ und dem vertikalen Abstand $H_Z$ ermittelt die Recheneinheit 22 anschließend den relativen horizontalen Abstand $b_Z$ sowie den relativen vertikalen Abstand $h_Z$. Die Berechnung erfolgt nach der Formel:

$$b_z = 2\frac{B_z}{B} \qquad h_z = 2\frac{H_z}{H}$$

Der relative horizontale Abstand $b_Z$ sowie der relative vertikale Abstand $h_Z$ werden im Verhältnis zur halben Bildbreite B bzw. zur halben Bildhöhe H berechnet. Es besteht jedoch in einer weiteren Ausgestaltung der Erfindung die Möglichkeit die relativen Abstände auf die volle Bildbreite und -höhe zu beziehen.

Die Vorzeichen der relativen Abstände $b_Z$ und $h_Z$ werden durch die Vorzeichen der horizontalen Abstände und vertikalen Abstände $B_Z$ und $H_Z$ definiert.

Die Recheneinheit 22 leitet diese relativen Abstandsdaten $b_Z$ und $h_Z$ über die Steuereinheit 11 zur Zentrale 13, von dieser über die Unterzentrale 16 an die Videoüberwachungskameraeinheit 17. Die Sende- und Empfangseinheit der Überwachungskameraeinheit 17 legt die Werte für den relativen horizontalen Abstand $b_Z$ und den relativen vertikalen Abstand $h_Z$ im Speicher ab. Außerdem ist der Steuereinheit 32 der aktuelle horizontale Öffnungswinkel $\alpha$ des Objektivs der Kameraeinheit 31 bekannt. Der horizontale Öffnungswinkel $\alpha$ des Objektivs ist für die volle Bildbreite B definiert. Im weiteren ist der aktuelle Öffnungswinkel $\beta$ des Objektivs der Kameraeinheit 31 für volle Bildhöhe H ebenfalls gespeichert. Anhand dieser Daten errechnet die Steuereinheit 32 den horizontalen Winkel $\alpha_Z$ zwischen der Mitte M des sichtbaren Bildes und dem Zielpunkt Z.

Die Berechnung erfolgt nach der Formel:

$$\alpha_Z = \arctan\left(b_z \cdot \tan\frac{\alpha}{2}\right)$$

Anschließend errechnet die Steuereinheit 32 den Winkel $\beta_Z$ zwischen dem Zielpunkt Z und der Mitte M des sichtbaren Bildes nach der Formel:

$$\beta_Z = \arctan\left(h_z \cdot \tan\frac{\beta}{2}\right)$$

Die Vorzeichen für die Winkel $\alpha_Z$ und $\beta_Z$ werden durch die Vorzeichen von $b_z$ und $h_z$ festgelegt.

Die Wertebereiche für die Winkel $\alpha_Z$ und $\beta_Z$ erstrecken sich von >-90° bis <+90°, da die Werte der Winkel $\alpha$ und $\beta$ bei Objektiven der Sicherheitstechnik zwischen >0° und <180° und die Werte für die relativen vertikalen und horizontalen Abständen $b_z$ und $h_z$ im Bereich von 0 bis +-1 liegen. Vorzeichen werden deshalb unverändert übertragen und Tangens-Werte gegen unendlich treten nicht auf.

In vorteilhafter Weise kann der Berechnungsaufwand für kleine Winkel von $\alpha_Z$ und $\beta_Z$ verringert werden, in dem die Steuereinheit 32 näherungsweise nach den Formeln

$$\alpha_Z = b_z\frac{\alpha}{2} \qquad \beta_Z = h_z\frac{\beta}{2}$$

rechnet.

Um die Überwachungskameraeinheit 17 über die Positionierungseinheit 34 mit der darauf fixierten Kameraeinheit 31 auf den neuen Zielpunkt Z zu positionieren, muß die Steuereinheit 32 den Neigewinkel $\gamma$ der Positionierungseinheit 34 sowie den Schwenkwinkel $\delta$ berücksichtigen.

Zunächst führt die Steuereinheit 32 die Berechnung für den Neigewinkel $\gamma$ durch. Hierzu hat die Steuereinheit den Neigewinkel $\gamma_M$, der Positionierungseinheit 34 gespeichert. Dies ist der Winkel zwischen der optischen Achse und der Pan-Achse, welcher aktuell von der Positionierungseinheit 34 eingenommen ist. Bei dem Neigewinkel $\gamma_Z$ handelt es sich um den Neigewinkel des Zielpunktes Z' gegenüber der Pan-Achse, vor der Ausführung der Neigebewegung der Positionierungseinheit 34. Der Punkt Z' ist die horizontale Projektion des Zielpunktes Z auf die vertikale Mittelachse. Der Winkel $\gamma_Z$ errechnet sich wie folgt:

$$\gamma_Z = \gamma_M + \beta_Z$$

Die Steuereinheit 32 rechnet danach den einzustellende Neigewinkel $\gamma_{ZM}$ wie folgt:

$$\gamma_{ZM} = \arccos(\cos\gamma_Z \cdot \cos\alpha_Z)$$

Hierbei beachtet die Steuereinheit 32, dass der Winkel $\gamma_Z$ rein rechnerisch negativ werden kann, wenn der Betrag von $-\beta_Z$ größer ist als $\gamma_M$. Falls der Winkel $\gamma_Z$ kleiner als 0 ist, führt die Steuereinheit 32 eine Korrektur durch, da anderenfalls die Szene, welche von der Kameraeinheit 31 aufgenommen wird, auf dem Bildschirm 1 kopfstehend abgebildet werden würde. Hierzu invertiert die Steuereinheit 32 das Vorzeichen des Winkels $\gamma_{ZM}$ und korrigiert den zugehörigen Schwenkwinkel $\delta_{ZM}$ um 180°.

Eine zweite Lösungsmöglichkeit besteht darin, dass die Winkel $\gamma_{ZM}$ und der Schwenkwinkel $\delta_{ZM}$ unverändert verwendet werden, wie sie berechnet wurden und die Steuereinheit 32 die Kamera 180° um die optische Achse dreht.

In einer weiteren vorteilhaften Ausgestaltung der Erfindung erkennt die Steuereinheit 11 bzw. die Recheneinheit 22 der Steuereinheit 11 die Falschlage des Bildes und stellt diese mit elektronischen Mitteln auf dem Bildschirm 1 in normaler Lage dar.

Die Steuereinheit 32 verfährt anschließend die Positionierungseinheit 34 auf den neuen Neigewinkel $\gamma_{ZM}$.

Anschließend errechnet die Steuereinheit 32 den Schwenkwinkel $\delta$, welcher ausgeführt werden muß, um endgültig den Zielpunkt Z in die Mitte M des sichtbaren Bildes zu verschieben.

Den Winkel $\delta$ für die auszuführende Schwenk-Bewegung errechnet die Steuereinheit 32 wie folgt:

$$\delta = \arctan\left(\frac{\tan \alpha_Z}{\sin \gamma_Z}\right)$$

Hierbei beachtet die Steuereinheit 32, dass der Winkel $\gamma_Z$ nicht die Werte 0 oder 180° annimmt. Anderenfalls würde es zu Konflikten wegen Division durch 0 kommen. Ist der Wert des Winkels $\gamma_Z$ gleich 0 oder 180°, so verwendet die Steuereinheit 32 für sin $\gamma_Z$ einen Wert der etwas größer als 0 ist. Vorzugsweise setzt die Steuereinheit das Vorzeichen dieses Wertes positiv an.

Den neuen Schwenkwinkel $\delta_{ZM}$, der bei der Schwenkbewegung einzustellen ist, errechnet die Steuereinheit 32 nach der Formel:

$$\delta_{ZM} = \delta_M + \delta$$

Dabei ist $\delta_M$ der absolute Winkel des Positionsgebers vor der Schwenkbewegung und es wird vorausgesetzt, dass der Wert bei Rechtsdrehung zunimmt. Die Steuereinheit 32 steuert dann die Positionierungseinheit 34 mit dem neuen Wert an worauf die Pan-Achse auf den neuen Winkel $\delta_{ZM}$ eingestellt wird.

Nachdem der Schwenkwinkel $\delta_{ZM}$ eingestellt ist, kann ein neuer Zielpunkt ausgewählt werden und die Überwachungskameraeinheit 17 auf diesen neuen Zielpunkt eingestellt werden. Dies erfolgt in der oben beschriebenen Weise.

In einer weiteren vorteilhaften Ausgestaltung der Erfindung ist der Bildschirm 1 mit einem Bildspeicher ausgestattet. Die Steuereinheit 22 friert nach der Betätigung einer der Bedieneinheiten 23, 24, 25 die Szene auf dem Bildschirm 1 ein bis die Überwachungskameraeinheit auf die neuen Einstellwerte eingestellt ist. Dann erst wird die aktuelle Szene wieder aus dem Bildschirm 1 angezeigt.

In einer weiteren vorteilhaften Ausgestaltung der Erfindung ist eine der Bedieneinheiten 23, 24, 25 als Computer-Maus ausgestaltet. Mit einem Einfach-Klick der rechten Taste der Computer-Maus wird der Zoom der Kamera gesteuert. Das mit der Pfeilspitze angegebene Detail der auf dem Bildschirm 1 dargestellten Szene wird an den Bildrand verfahren. Es wird hierzu der grössere Wert von $b_Z$ oder $h_Z$ übertragen. Nach der Durchführung der Tangenskorrektur wird dieser Wert mit dem aktuellen Öffnungswinkel des Kameraobjektivs multipliziert und ergibt so den neu einzustellenden Öffnungswinkel.

Durch einen Doppelklick oder einem langen Klick der rechten Taste der Computer-Maus - je nach Voreinstellung des Systems - wird, unabhängig vom aktuellen Standort des Mauszeigers auf dem Bildschirm 1, ein, durch Voreinstellung wählbarer Faktor, insbesondere in der Grössenordnung zwei, übertragen. Nach Durchführung der Tangenskorrektur wird dieser Faktor mit dem aktuellen Öffnungswinkel des Objektives der Kamera multipliziert und ergibt den neu einzustellenden Öffnungswinkel. Die Überwachungszeit der Klickdauer ist durch Voreinstellungen wählbar.

Bezugszeichenliste

| B | Breite des sichtbaren Bildes |
|---|---|
| H | Höhe des sichtbaren Bildes |
| Z | zufällig gewählter Zielpunkt |
| M | Mitte des sichtbaren Bildes |
| $B_Z$ | horizontaler Abstand zwischen Zielpunkt und Mitte des sichtbaren Bildes |
| $H_Z$ | vertikaler Abstand zwischen Zielpunkt und Mitte des sichtbaren Bildes |
| $b_Z$ | relativer horizontaler Abstand zwischen Zielpunkt und Mitte des sichtbaren Bildes |
| $h_Z$ | relativer horizontaler Abstand zwischen Zielpunkt und Mitte des sichtbaren Bildes |
| Z' | horizontale Projektion des Zielpunkts Z, auf die vertikale Mittelachse |

$\alpha$      horizontaler Öffnungswinkel des Objektives

$\beta$      vertikaler Öffnungswinkel des Objektives

$\delta$      auszuführender Schwenkwinkel, um den Zielpunkt Z in die Mitte M des sichtbaren Bildes zu bringen

$\alpha_Z$      horizontaler Winkel am Ort der Kamera zwischen der Mitte des sichtbaren Bildes und dem Zielpunkt

$\beta_Z$      vertikaler Winkel am Ort der Kamera zwischen der Mitte des sichtbaren Bildes und dem Zielpunkt

$\gamma_Z$      Neigewinkel des Punkts Z' gegenüber der Pan-Achse, vor der Schwenk-/Neigebewegung.

$\gamma_M$      Neigewinkel der Bildmitte (optische Achse des Objektivs) gegenüber der Pan-Achse, vor der Schwenk-/Neigebewegung

$\delta_M$      Winkelstellung der Pan-Achse vor der Schwenk-/Neigebewegung

$\gamma_{ZM}$      neuer Neigewinkel der optischen Achse des Objektivs gegenüber der Pan-Achse nach der Schwenk-/Neigebewegung.

$\delta_{ZM}$      Winkelstellung der Pan-Achse nach der Schwenk-/Neigebewegung.

1      Bildschirm

11      Steuereinheit

12      Unterzentrale

13      Zentrale

14      Unterzentrale

15      Überwachungskameraeinheit

16      Unterzentrale

17      Überwachungskameraeinheit

18      Unterzentrale

19      Überwachungskameraeinheit

21      Anzeigeeinheit

22      Recheneinheit

23      Bedieneinheit

24      Bedieneinheit

25      Bedieneinheit

26      Sende- und Empfangseinheit

31      Kameraeinheit

32      Steuereinheit

33      Sende- und Empfangseinheit

34      Positionierungseinheit

**Patentansprüche**

1. Verfahren zur Bewegungssteuerung einer Kamera, welche auf einer Positioniereinrichtung befestigt ist, mit folgenden Schritten:

- die von einer Kamera aufgenommene Szene wird über eine Übertragungsstrecke übertragen und auf einem Bildschirm (1) angezeigt,
- auf dem Bildschirm (1) wird eine Markierung dargestellt,
- die Markierung wird über eine Bedieneinrichtung über den Bildschirm (1) verschoben und eingestellt und als Antwort auf ein mit der Bedieneinrichtung auslösbares Signal wird der Ort der eingestellten Markierung als Zielpunkt (Z) ausgewählt, oder der Zielpunkt (Z) wird über die Bedieneinrichtung auf dem Bildschirm angegeben, wobei,
- die relativen Abstände ($h_z$, $b_z$) des Zielpunktes (Z) zur Mitte (M) des sichtbaren Bildes errechnet werden,

**dadurch gekennzeichnet, dass**

- die Neupositionierung anhand
eines Schwenkwinkel ($\delta$) mittels eines horizontalen Winkels ($\alpha_z$), eines ersten Neigewinkels ($\gamma_M$) und eines vertikalen Winkels ($\beta_z$)
wobei der Schwenkwinkel ($\delta$) errechnet wird mit

$$\text{arctan } (\tan(\alpha_z) / \sin ( \gamma_M + \beta_z)),$$

und eines zweiten Neigewinkels ($\gamma_{ZM}$) mittels des vertikalen Winkels ($\beta_z$), des ersten Neigewinkels ($\gamma_M$) und des horizontalen Winkels ($\alpha_z$) wobei der zweiten Neigewinkels ($\gamma_{ZM}$) errechnet wird mit

$$\text{arccos } ( \cos (\gamma_M + \beta_z) * \cos (\alpha_z))$$

vorgenommen wird, um **dadurch** den Zielpunkt (Z) in die Mitte (M) des sichtbaren Bildes zu verschieben,
- wobei der horizontale Winkel ($\alpha_z$) am Ort der Kamera zwischen dem Zielpunkt (Z) und der Mitte (M) des sichtbares Bildes in Abhängigkeit des relativen horizontalen Abstands ($b_z$) ermittelt wird und der vertikale Winkel ($\beta_z$) am Ort der Kamera zwischen dem Zielpunkt (Z) und der Mitte (M) des sichtbaren Bildes in Abhängigkeit des relativen vertikalen Abstands ($h_z$) ermittelt wird,
- der erste Neigewinkels ($\gamma_M$) der aktuell eingestellte Winkel am Ort der Kamera zwischen der Mitte (M) des aktuell sichtbaren Bildes und der - an Achse vor Ausführung der Schwenk-/Nelgebewegung ist,
- der zweite Neigewinkel ($\gamma_{ZM}$) der Winkel am Ort der Kamera zwischen dem Zielpunkt (Z) und der Pan-Achse ist und von der Positioniereinheit eingestellt wird, um den Zielpunkt (Z) in die Mitte (M) des sichtbaren Bildes zu verfahren, und
- der Schwenkwinkel ($\delta$) der Winkel, um den die Kamera um die Pan-Achse geschwenkt werden muss, um den Zielpunkt (Z) in die Mitte (M) des sichtbaren Bildes zu bringen, ist und von der Positionierungseinheit eingestellt wird, um den Zielpunkt (Z) in die Mitte (M) des sichtbaren Bildes zu bewegen.

2. Verfahren nach Anspruch 1,
**dadurch gekennzeichnet, dass**
die relativen Abstände ($h_z$, $b_z$) an die Positioniereinrichtung der Kamera
übertragen werden und von der Positioniereinrichtung anhand der ihr bekannten Daten die Positionierung vorgenommen wird.

3. Verfahren nach Anspruch 1 oder 2,
**dadurch gekennzeichnet, dass**
der relative horizontale Abstand ($b_z$) des Zielpunktes (Z) von der Mitte (M) des sichtbaren Bildes im Verhältnis zur halben Bildbreite (B) und der relative vertikale Abstand ($h_z$) des Zielpunktes (Z) von der Mitte (M) des sichtbaren Bildes im Verhältnis zur halben Bildhöhe (H) errechnet wird.

4. Verfahren nach einem oder mehreren der vorangehenden Ansprüche 1 bis 3,
**dadurch gekennzeichnet, dass**
dem relativen vertikalen Abstand ($h_z$) ein positives Vorzeichen zugewiesen wird, wenn der Zielpunkt (Z) auf dem Bildschirm (1) oberhalb der Mitte (M) des sichtbaren Bildes liegt und dem relativen horizontalen Abstand ($b_z$) ein positives Vorzeichen zugewiesen wird, wenn sich der Zielpunkt (Z) rechts der Mitte (M) des sichtbaren Bildes befindet und dem relativen vertikalen Abstand ($h_z$) ein negatives Vorzeichen zugewiesen wird, wenn der Zielpunkt (Z) auf dem Bildschirm (1) unterhalb der Mitte (M) des sichtbaren Bildes liegt und dem relativen horizontalen Abstand ($b_z$) ein negatives Vorzeichen zugewiesen wird, wenn sich der Zielpunkt (Z) links der Mitte (M) des sichtbaren Bildes befindet.

5. Verfahren nach einem oder mehreren der vorangehenden Ansprüche 1 bis 4,
**dadurch gekennzeichnet, dass**
der horizontale Winkel ($\alpha_z$) am Ort der Kamera zwischen dem Zielpunkt (Z) und der Mitte (M) des sichtbaren Bildes, für kleine Winkel des horizontalen Winkels ($\alpha z$), nach der Formel berechnet wird,

$$\alpha_z = b_z \frac{\alpha}{2},$$

wobei a der horizontale Öffnungswinkel des Objektives der Kamera und $b_z$ der relative horizontale Abstand zwischen Zielpunkt (Z) und Mitte (M) des sichtbaren Bildes ist und der vertikale Winkel ($\beta_z$) am Ort der Kamera zwischen dem Zielpunkt (Z) und der Mitte (M) des sichtbaren Bildes, für kleine Winkel des vertikalen Winkels ($\beta_z$), nach der Formel berechnet wird,

$$\beta_z = h_z \frac{\beta}{2},$$

wobei $\beta$ der vertikale Öffnungswinkel des Objektives der Kamera und $h_z$ der relative vertikale Abstand zwischen Zielpunkt (Z) und Mitte (M) des sichtbaren Bildes ist.

6. Verfahren nach einem oder mehreren der vorangehenden Ansprüche 1 bis 4,
**dadurch gekennzeichnet, dass**
der horizontale Winkel ($\alpha_z$) am Ort der Kamera zwischen dem Zielpunkt (Z) und der Mitte (M) des sichtbaren Bildes exakt berechnet wird gemäß

$$\alpha_z = \arctan\left( b_z \cdot \tan\frac{\alpha}{2} \right)$$

wobei $\alpha$ der horizontale Öffnungswinkel des Objektives der Kamera und $b_z$ der relative horizontale Abstand zwischen Zielpunkt (Z) und Mitte (M) des sichtbaren Bildes ist und der vertikale Winkel ($\beta z$) am Ort der Kamera zwischen dem Zielpunkt (Z) und der Mitte (M) des sichtbaren Bildes exakt berechnet wird gemäß

$$\beta_z = \arctan\left( h_z \cdot \tan\frac{\beta}{2} \right)$$

wobei $\beta$ der vertikale Öffnungswinkel des Objektives der Kamera und $h_z$ der relative vertikale Abstand zwischen Zielpunkt (Z) und Mitte (M) des sichtbaren Bildes ist.

7. Verfahren nach einem oder mehreren der vorangehenden Ansprüche 1 bis 6,
**dadurch gekennzeichnet, dass** die Werte für den horizontalen Winkel ($\alpha_z$) am Ort der Kamera zwischen dem Zielpunkt (Z) und der Mitte (M) des sichtbaren Bildes und für den vertikalen Winkel ($\beta_z$) am Ort der Kamera zwischen dem Zielpunkt (Z) und der Mitte (M) des sichtbaren Bildes im Bereich von >-90° bis <+90° liegen.

8. Verfahren nach einem oder mehreren der vorangehenden Ansprüche 1 bis 7,
**dadurch gekennzeichnet, dass** der vertikale Winkel ($\beta z$) am Ort der Kamera und/oder der horizontale Winkel ($\alpha z$) am Ort der Kamera mit Minus 1 multipliziert werden muss, wenn die von der Überwachungskamera aufgenommene Szene auf dem Bildschirm (1) 180° um die Mitte gedreht dargestellt wird.

9. Verfahren nach einem oder mehreren der.vorangehenden Ansprüche 1 bis 8,
**dadurch gekennzeichnet, dass** ein dritter Neigewinkel ($\gamma_z$) als Winkel zwischen der Pan-Achse und der horizontalen Projektion des Zielpunktes (Z) auf die Projektion der vertikalen Bildachse ermittelt wird.

10. Verfahren nach einem oder mehreren der vorangehenden
Ansprüche1 bis 8,
**dadurch gekennzeichnet, dass**
ein dritter Neigewinkel ($\gamma_z$) durch Addition des relativen vertikalen Winkels ($\beta_z$) am Ort der Kamera und des aktuell eingestellten ersten Neigewinkels ($\gamma_M$) zwischen der Mitte (M) des sichtbaren Bildes und der Pan-Achse vor Ausführung der Schwenk-/Neigebewegung ermittelt wird.
Winkel am Ort der Kamera zwischen dem Zielpunkt (Z) und der Mitte (M) des sichtbaren Bildes ist.

11. Verfahren nach einem oder mehreren der vorangehenden
Ansprüche 1 bis 10,
**dadurch gekennzeichnet, dass** die absolute Winkelstellung ($\delta_{ZM}$) der Positioniereinheit der Kamera, bezogen zur Pan-Achse nach der Schwenkbewegung, durch Summation des auszuführenden Schwenkwinkels ($\delta$) um die Pan-

Achse, um den Zielpunkt (Z) in die Mitte (M) des sichtbaren Bildes zu bringen, und der absoluten Winkelstellung ($\delta_M$) der Pan-Achse vor der Schwenkbewegung errechnet wird, wobei vorausgesetzt wird, dass der Winkel der absoluten Winkelstellung ($\delta_M$) der Pan-Achse vor der Schwenkbewegung bei Rechtsdrehung zunimmt.

**12.** Verfahren nach einem oder mehreren der vorangehenden Ansprüche 1 bis 11,
**dadurch gekennzeichnet, dass** eine Korrektur ausgeführt wird, wenn der dritte Neigewinkel ($\gamma_z$) vor der Neigebewegung Null ist, wobei dann ersatzweise ein sehr kleiner Wert größer als Null für den Wert des dritten Neigewinkels ($\gamma_z$) eingesetzt wird, insbesondere mit positivem Vorzeichen.

**13.** Verfahren nach einem oder mehreren der vorangehenden Ansprüche 1 bis 12,
**dadurch gekennzeichnet, dass**
Korrekturen erforderlich sind, wenn der zweite Neigewinkel ($\gamma_{ZM}$) kleiner als Null wird.

**14.** Verfahren nach einem oder mehreren der vorangehenden Ansprüche 1 bis 13,
**dadurch gekennzeichnet, dass** das Vorzeichen des zweiten Neigewinkels ($\gamma_{ZM}$) invertiert und der Schwenkwinkel ($\delta_{ZM}$) um $\pm$ 180° korrigiert wird, wenn der zweite Neigewinkel ($\gamma_{ZM}$) mit kleiner Null errechnet wurde.

**15.** Verfahren nach einem oder mehreren der vorangehenden Ansprüche 1 bis 14,
**dadurch gekennzeichnet, dass**
der zweite Neigewinkel ($\gamma_{ZM}$) und der errechnete Schwenkwinkel ($\delta_{ZM}$) durch die Positioniereinheit eingestellt werden, wobei aber die Kamera 180° um die optische Achse gedreht wird oder das Videosignal der Kamera vor der Anzeige auf den Bildschirm (1) derart nachbearbeitet wird, dass es in Normallage erscheint, wenn der zweite Neigewinkel ($\gamma_{ZM}$) mit kleiner Null errechnet wurde.

**16.** Verfahren nach einem oder mehreren der vorangehenden Ansprüche 1 bis 15,
**dadurch gekennzeichnet, dass**
zur Steuerung von Focus und Zoom die Anzahl der Weg-Inkremente aus der Bewegung der Bewegungseinrichtung ermittelt und übertragen wird und eine Umrechnung für die entsprechenden ausführenden Einheiten durchgeführt wird, die **dadurch** eine wegproportionale Änderung ihrer Einstellung durchführen.

## Claims

**1.** Method for movement control of a camera fastened on a positioning device, comprising the following steps;

- the scene recorded by a camera is transmitted by way of a transmission path and displayed on a screen (1),
- a marking is illustrated on the screen (1),
- the marking is displaced by way of a control device over the screen (1) and set and as response to a signal, which can be triggered by the control device, the location of the set marking is selected as target point (Z) or the target point (Z) is indicated on the screen by way of the control device, wherein
- the relative spacings ($h_z$, $b_z$) of the target point (Z) from the centre (M) of the visible image are calculated,

**characterised in that**

- the new positioning is undertaken by way of a pan angle ($\delta$) by means of a horizontal angle ($\alpha z$), a first tilt angle ($\gamma_M$) and a vertical angle ($\beta_z$), wherein the pan angle ($\delta$) is calculated by arctan (tan($\alpha z$) / sin ($\gamma_M$ + $\beta_z$)), and a second tilt angle ($\gamma_{ZM}$) by means of the vertical angle ($\beta_z$), the first tilt angle ($\gamma_M$) and the horizontal angle ($\alpha_z$), wherein the second tilt angle ($\gamma_{ZM}$) is calculated with arccos (cos $\gamma_M$ + $\beta_z$) cos ($\alpha_z$), in order to thereby displace the target point (Z) to the centre (M) of the visible image,
- wherein the horizontal angle ($\alpha_z$) is determined at the location of the camera between the target point (Z) and the centre (M) of the visible image in dependence on the relative horizontal spacing ($b_z$) and the vertical angle ($\beta_z$) at the location of the camera between the target point (Z) and the centre (M) of the visible image in dependence on the relative vertical spacing ($h_z$),

- the first tilt angle ($\gamma_M$) is the current set angle at the location of the camera between the centre (M) of the currently visible image and the pan axis prior to execution of the pan/tilt movement,
- the second tilt angle ($\gamma_{ZM}$) is the angle at the location of the camera between the target point (Z) and the pan axis and is set by the positioning unit in order to move the target point (Z) to the centre (M) of the visible image and
- the pivot angle ($\delta$) is the angle by which the camera has to be pivoted about the pan axis in order the bring the target point (Z) to the centre (M) of the visible image and is set by the positioning unit in order to move the target point (Z) to the centre (M) of the visible image.

2. Method according to claim 1, **characterised in that** the relative spacings ($h_z$, $b_z$) are transmitted to the positioning device of the camera and the positioning is undertaken by the positioning device on the basis of the data known thereto.

3. Method according to claim 1 or 2, **characterised in that** the relative horizontal spacing ($b_z$) of the target point (Z) from the centre (M) of the visible image is calculated in the ratio to half image width (B) and the relative vertical spacing ($h_z$) of the target point (Z) from the centre (M) of the visible image is calculated in the ratio to half image height (H).

4. Method according to one or more of the preceding claims 1 to 3, **characterised in that** a positive sign is allocated to the relative vertical spacing ($h_z$) when the target point (Z) lies on the screen (1) above the centre (M) of the visible image and a positive sign is allocated to the relative horizontal spacing ($b_z$) when the target point (Z) is disposed to the right of the centre (M) of the visible image and a negative sign is allocated to the relative vertical spacing ($h_z$) when the target point (Z) lies on the screen (1) below the centre (M) of the visible image and a negative sign is allocated to the relative horizontal spacing ($b_z$) when the target point (Z) is disposed to the left of the centre (M) of the visible image.

5. Method according to one or more of the preceding claims 1 to 4, **characterised in that** the horizontal angle ($\alpha_z$) at the location of the camera between the target point (Z) and the centre (M) of the visible image is calculated, for small angles of the horizontal angle ($\alpha_z$), according to the formula

$$\alpha_z = b_z \frac{\alpha}{2},$$

wherein $\alpha$ is the horizontal opening angle of the objective of the camera and $b_z$ is the relative horizontal spacing between target point (Z) and centre (M) of the visible image and the vertical angle ($\beta_z$) at the location of the camera between the target point (Z) and the centre (M) of the visible image is calculated, for small angles of the vertical angle ($\beta z$), according to the formula

$$\beta_z = h_z \frac{\beta}{2},$$

wherein $\beta$ is the vertical opening angle of the objective of the camera and $h_z$ is the relative vertical spacing between target point (Z) and centre (M) of the visible image.

6. Method according to one or more of the preceding claims 1 to 4, **characterised in that** the horizontal angle ($\alpha_z$) at the location of the camera between the target point (Z) and the centre (M) of the visible image is exactly calculated according to

$$\alpha_z = \arctan\left( b_z \cdot \tan\frac{\alpha}{2} \right)$$

wherein $\alpha$ is the horizontal opening angle of the objective of the camera and $b_z$ is the relative horizontal spacing between target point (Z) and centre (M) of the visible image and the vertical angle ($\beta_z$) at the location of the camera between the target point (Z) and the centre (M) of the visible image is exactly calculated according to

$$\beta_z = \arctan\left( h_z \cdot \tan\frac{\beta}{2} \right)$$

wherein $\beta$ is the vertical opening angle of the objective of the camera and $h_z$ is the relative vertical spacing between target point (Z) and centre (M) of the visible image.

7. Method according to one of more of the preceding claims 1 to 6, **characterised in that** the values for the horizontal angle ($\alpha_z$) at the location of the camera between the target point (Z) and the centre (M) of the visible image and for the vertical angle ($\beta_z$) at the location of the camera between the target point (Z) and the centre (M) of the visible image lie in the region of > -90° to > + 90°.

8. Method according to one or more of the preceding claims 1 to 7, **characterised in that** the vertical angle ($\beta_z$) at the location of the camera and/or the horizontal angle ($\alpha_z$) at the location of the camera has to be multiplied by minus 1 when the scene recorded by the monitoring camera is illustrated on the screen (1) turned 180° about the centre.

9. Method according to one or more of the preceding claims 1 to 8, **characterised in that** a third tilt angle ($\gamma_z$) is determined as angle between the pan axis and the horizontal projection of the target point (Z) onto the projection of the vertical image axis.

10. Method according to one or more of the preceding claims 1 to 8, **characterised in that** a third tilt angle ($\gamma_z$) is determined by addition of the relative vertical angle ($\beta_z$) at the location of the camera and the currently set first tilt angle ($\gamma_M$) between the centre (M) of the visible image and the pan axis prior to execution of the pan/tilt movement.

11. Method according to one or more of the preceding claims 1 to 10, **characterised in that** the absolute angle setting ($\delta_{ZM}$) of the positioning unit of the camera, referred to the pan axis after the pan movement, is calculated by summation of the pan angle ($\beta$), which is to be executed, about the pan axis, in order to bring the target point (Z) to the centre (M) of the visible image, and the absolute angle setting ($\delta_M$) of the pan axis is calculated prior to the pivot movement, wherein it is presupposed that the angle of the absolute angle setting ($\delta_M$) of the pan axis prior to the pivot movement increases with rotation to the right.

12. Method according one or more of the preceding claims 1 to 11, **characterised in that** a correction is performed when the third tilt angle ($\gamma_z$) prior to the tilt movement is zero, wherein then in substitution a very small angle greater than zero is used for the value of third tilt angle ($\gamma_z$), particularly with a positive sign.

13. Method according to one or more of the preceding claims 1 to 12, **characterised in that** corrections are required when the second tilt angle ($\gamma_{ZM}$) is less than zero.

14. Method according to one or more of the preceding claims 1 to 13, **characterised in that** the sign of the second tilt angle ($\gamma_{ZM}$) is inverted and the pan angle ($\delta_{ZM}$) is corrected by plus or minus 180° when the second tilt angle ($\gamma_{ZM}$) was calculated at less than zero.

15. Method according to one or more of the preceding claims 1 to 14, **characterised in that** the second tilt angle ($\gamma_{ZM}$) and the calculated pan angle ($\delta_{ZM}$) are set by the positioning unit, wherein, however, the camera is turned 180° about the optical axis or the video signal of the camera is reprocessed, prior to display on the screen (1), in such a manner that it appears in the normal position when the second tilt angle ($\gamma_{ZM}$) was calculated at less than zero.

16. Method according to one or more of the preceding claims 1 to 15, **characterised in that** for control of focus and zoom the number of travel increments is ascertained from the movement of the movement device and transmitted and a recalculation for the appropriate units to be executed is undertaken, which thereby perform a travel-proportional change in the setting thereof.

**Revendications**

1. Procédé pour commander le déplacement d'une caméra qui est fixée sur un dispositif de positionnement, comprenant les étapes suivantes consistant à :

   - transmettre la scène enregistrée par une caméra sur une voie de transmission et l'afficher sur un écran (1),
   - représenter un repère à l'écran (1),
   - déplacer le repère à travers l'écran (1) et le régler, par l'intermédiaire d'un dispositif de commande, et en réponse à un signal pouvant être déclenché par le dispositif de commande, choisir l'emplacement du repère réglé comme point de mire (Z), ou bien indiquer le point de mire (Z) par l'intermédiaire du dispositif de commande à l'écran, ce par quoi :
   - les distances relatives ($h_Z$, $b_Z$) du point de mire (Z) par rapport au centre (M) de l'image visible sont calculées,

   **caractérisé en ce que**

   - le repositionnement est effectué à l'aide
   d'un angle de pivotement ($\delta$) au moyen d'un angle horizontal ($\alpha_Z$), d'un premier angle d'inclinaison ($\gamma_M$) et d'un angle vertical ($\beta_Z$),
   ce par quoi l'angle de pivotement ($\delta$) est calculé par

   $$\arctan(\tan(\alpha_Z) / \sin(\gamma_M + \beta_Z)),$$

   et d'un deuxième angle d'inclinaison ($\gamma_{ZM}$) au moyen de l'angle vertical ($\beta_Z$), du premier angle d'inclinaison ($\gamma_M$) et de l'angle horizontal ($\alpha_z$)
   dans lequel le deuxième angle d'inclinaison ($\gamma_{ZM}$) est calculé par

   $$\arccos(\cos(\gamma_M + \beta_Z) * \cos(\alpha_Z)),$$

   afin de décaler ainsi le point de mire (Z) au centre (M) de l'image visible,
   - dans lequel l'angle horizontal ($\alpha_Z$) est déterminé à l'emplacement de la caméra entre le point de mire (Z) et le centre (M) de l'image visible en fonction de la distance horizontale relative ($b_Z$), et l'angle vertical ($\beta_Z$) est déterminé à l'emplacement de la caméra entre le point de mire (Z) et le centre (M) de l'image visible en fonction de la distance verticale relative ($h_Z$),
   - le premier angle d'inclinaison ($\gamma_M$) est l'angle actuellement réglé à l'emplacement de la caméra entre le centre (M) de l'image actuellement visible et l'axe panoramique avant l'exécution du mouvement de pivotement/inclinaison,
   - le deuxième angle d'inclinaison ($\gamma_{ZM}$) est l'angle à l'emplacement de la caméra entre le point de mire (Z) et l'angle panoramique et est réglé par l'unité de positionnement pour déplacer le point de mire (Z) au centre (M) de l'image visible, et
   - l'angle de pivotement ($\delta$) est l'angle par lequel la caméra doit être amenée à pivoter autour de l'axe panoramique afin d'amener le point de mire (Z) au centre (M) de l'image visible, et est réglé par l'unité de positionnement pour déplacer le point de mire (Z) au centre (M) de l'image visible.

2. Procédé selon la revendication 1,
   **caractérisé en ce que**
   les distances relatives ($h_Z$, $b_Z$) sont transmises au dispositif de positionnement de la caméra, et le dispositif de positionnement procède au positionnement à l'aide des données dont il a connaissance.

3. Procédé selon la revendication 1 ou 2,
   **caractérisé en ce que**
   la distance horizontale relative ($b_Z$) du point de mire (Z) par rapport au centre (M) de l'image visible est calculée par rapport à la moitié de la largeur d'image (B), et la distance verticale relative ($h_Z$) du point de mire (Z) par rapport au centre (M) de l'image visible est calculée par rapport à la moitié de la hauteur d'image (H).

**4.** Procédé selon l'une quelconque ou plusieurs des revendications précédentes 1 à 3,
**caractérisé en ce que**
la distance verticale relative ($h_Z$) se voit attribuer un signe positif lorsque le point de mire (Z) se trouve à l'écran (1) au-dessus du centre (M) de l'image visible, et la distance horizontale relative ($b_Z$) se voit attribuer un signe positif lorsque le point de mire (Z) se trouve à droite du centre (M) de l'image visible, et la distance verticale relative ($h_Z$) se voit attribuer un signe négatif lorsque le point de mire (Z) se trouve à l'écran (1) au-dessous du centre (M) de l'image visible, et la distance horizontale relative ($b_Z$) se voit attribuer un signe négatif lorsque le point de mire (Z) se trouve à gauche du centre (M) de l'image visible.

**5.** Procédé selon l'une quelconque ou plusieurs des revendications précédentes 1 à 4,
**caractérisé en ce que**
l'angle horizontal ($\alpha_Z$) est calculé à l'emplacement de la caméra entre le point de mire (Z) et le centre (M) de l'image visible, pour de petits angles de l'angle horizontal ($\alpha_Z$) selon la formule

$$\alpha_z \;=\; b_z\,\frac{\alpha}{2}\,,$$

où $\alpha$ est l'angle d'ouverture horizontal de l'objectif de la caméra et $b_Z$ est la distance horizontale relative entre le point de mire (Z) et le centre (M) de l'image visible, et l'angle vertical ($\beta_Z$) à l'emplacement de la caméra entre le point de mire (Z) et le centre (M) de l'image visible est calculé pour de petits angles de l'angle vertical ($\beta_Z$), selon la formule

$$\beta_z \;=\; h_z\,\frac{\beta}{2}\,,$$

où $\beta$ est l'angle d'ouverture vertical de l'objectif de la caméra et $h_Z$ est la distance verticale relative entre le point de mire (Z) et le centre (M) de l'image visible.

**6.** Procédé selon l'une quelconque ou plusieurs des revendications précédentes 1 à 4,
**caractérisé en ce que**
l'angle horizontal ($\alpha_Z$) à l'emplacement de la caméra entre le point de mire (Z) et le centre (M) de l'image visible est calculé exactement selon

$$\alpha_Z = \arctan\!\left( b_z \cdot \tan\frac{\alpha}{2} \right)$$

où $\alpha$ est l'angle d'ouverture horizontal de l'objectif de la caméra, et $b_Z$ est la distance horizontale relative entre le point de mire (Z) et le centre (M) de l'image visible, et l'angle vertical ($\beta_Z$) à l'emplacement de la caméra entre le point de mire (Z) et le centre (M) de l'image visible est calculé exactement selon

$$\beta_Z = \arctan\!\left( h_z \cdot \tan\frac{\beta}{2} \right)$$

où $\beta$ est l'angle d'ouverture vertical de l'objectif de la caméra, et $h_Z$ est la distance verticale relative entre le point de mire (Z) et le centre (M) de l'image visible.

**7.** Procédé selon l'une quelconque ou plusieurs des revendications précédentes 1 à 6,
**caractérisé en ce que**
les valeurs pour l'angle horizontal ($\alpha_Z$) à l'emplacement de la caméra entre le point de mire (Z) et le centre (M) de l'image visible et pour l'angle vertical ($\beta_Z$) à l'emplacement de la caméra entre le point de mire (Z) et le centre (M) de l'image visible se situent dans la plage de >-90° à <+90°.

**8.** Procédé selon l'une quelconque ou plusieurs des revendications précédentes 1 à 7,
**caractérisé en ce que**
l'angle vertical ($\beta_Z$) à l'emplacement de la caméra et/ou l'angle horizontal ($\alpha_Z$) à l'emplacement de la caméra est/sont à multiplier par moins 1 lorsque la scène enregistrée par la caméra de surveillance est représentée à l'écran (1) en étant tournée de 180° autour du centre.

**9.** Procédé selon l'une quelconque ou plusieurs des revendications précédentes 1 à 8,
**caractérisé en ce que**
un troisième angle d'inclinaison ($\gamma_Z$) est déterminé comme un angle entre l'axe panoramique et la projection horizontale du point de mire (Z) sur la projection de l'axe d'image vertical.

**10.** Procédé selon l'une quelconque ou plusieurs des revendications précédentes 1 à 8,
**caractérisé en ce que**
un troisième angle d'inclinaison ($\gamma_Z$) est déterminé par l'addition de l'angle vertical relatif ($\beta_Z$) à l'emplacement de la caméra et du premier angle d'inclinaison ($\gamma_M$) actuellement réglé entre le centre (M) de l'image visible et l'axe panoramique avant l'exécution du mouvement de pivotement/inclinaison.

**11.** Procédé selon l'une quelconque ou plusieurs des revendications précédentes 1 à 10,
**caractérisé en ce que**
la position angulaire absolue ($\delta_{ZM}$) de l'unité de positionnement de la caméra, par rapport à l'axe panoramique après le mouvement de pivotement, est calculée par sommation de l'angle de pivotement ($\delta$) à parcourir autour de l'axe panoramique afin d'amener le point de mire (Z) au centre (M) de l'image visible et de la position angulaire absolue ($\delta_M$) de l'axe panoramique avant le mouvement de pivotement, en supposant que l'angle de la position angulaire absolue ($\delta_M$) de l'axe panoramique augmente avant le mouvement de pivotement lors d'une rotation à droite.

**12.** Procédé selon l'une quelconque ou plusieurs des revendications précédentes 1 à 11,
**caractérisé en ce que**
une correction est effectuée lorsque le troisième angle d'inclinaison ($\gamma_Z$) avant le mouvement d'inclinaison est égal à zéro, dans lequel, à titre de remplacement, une très petite valeur supérieure à zéro est substituée à la valeur du troisième angle d'inclinaison ($\gamma_Z$), en particulier avec un signe positif.

**13.** Procédé selon l'une quelconque ou plusieurs des revendications précédentes 1 à 12,
**caractérisé en ce que**
des corrections sont nécessaires lorsque le deuxième angle d'inclinaison ($\gamma_{ZM}$) devient inférieur à zéro.

**14.** Procédé selon l'une quelconque ou plusieurs des revendications précédentes 1 à 13,
**caractérisé en ce que**
le signe du deuxième angle d'inclinaison ($\gamma_{ZM}$) est inversé et l'angle de pivotement ($\delta_{ZM}$) est corrigé de $\pm 180°$ lorsque le deuxième angle d'inclinaison ($\gamma_{ZM}$) a été calculé comme étant inférieur à zéro.

**15.** Procédé selon l'une quelconque ou plusieurs des revendications précédentes 1 à 14,
**caractérisé en ce que**
le deuxième angle d'inclinaison ($\gamma_{ZM}$) et l'angle de pivotement calculé ($\delta_{ZM}$) sont réglés par l'unité de positionnement, la caméra étant toutefois amenée à tourner de 180° autour de l'axe optique ou le signal vidéo de la caméra avant l'affichage à l'écran (1) étant retraité de telle sorte qu'il apparaît dans la position normale lorsque le deuxième angle d'inclinaison ($\gamma_{ZM}$) a été calculé comme étant inférieur à zéro.

**16.** Procédé selon l'une quelconque ou plusieurs des revendications précédentes 1 à 15,
**caractérisé en ce que**
pour la commande de la mise au point et du zoom, le nombre des incréments de course est déterminé à partir du déplacement du dispositif de déplacement et transmis et **en ce qu'**une conversion est effectuée pour les unités d'exécution correspondantes qui exécutent ainsi une modification de leur réglage, proportionnelle à la course.

**FIG 1**

**FIG 2**

**FIG 3**

**FIG 4**

**FIG 5**

**FIG 6**

**EP 1 274 231 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3984628 A
- DE 19811286
- DE 4233137